# Europäisches Patentamt

# European Patent Office

# Office européen des brevets

(19)

(11) Publication number: **0 227 308**
**B1**

(12)

# EUROPEAN PATENT SPECIFICATION

(45) Date of publication of the patent specification: **04.10.89**

(51) Int. Cl.⁴: **B 22 C 7/02**, B 22 C 9/04

(21) Application number: **86309150.0**

(22) Date of filling: **24.11.86**

(54) Method of joining foam pattern members to form an assembly for use in an evaporative casting process.

(30) Priority: **06.12.85 US 805656**

(43) Date of publication of application:
**01.07.87 Bulletin 87/27**

(45) Publication of the grant of the patent:
**04.10.89 Bulletin 89/40**

(84) Designated Contracting States:
**DE FR GB IT**

(56) References cited:
**EP-A-0 092 690**
**US-A-4 222 429**
**US-A-4 240 492**
**US-A-4 281 705**

(73) Proprietor: **FORD MOTOR COMPANY LIMITED,
Eagle Way, Brentwood Essex CM13 3BW (GB)**
(84) Designated Contracting States: **GB**

(73) Proprietor: **FORD- WERKE AKTIENGESELLSCHAFT,
Werk Köln- Niehl Henry- Ford- Strasse Postfach
60 40 02, D-5000 Köln 60 (DE)**
(84) Designated Contracting States: **DE**

(73) Proprietor: **FORD FRANCE SOCIETE ANONYME,
344 Avenue Napoléon Bonaparte B.P. 307, F-92506
Rueil Malmaison Cedex (FR)**
(84) Designated Contracting States: **FR**

(73) Proprietor: **Ford Motor Company, The American
Road, Dearborn, MI 48121 (US)**
(84) Designated Contracting States: **IT**

(72) Inventor: **Helgesen, Gary Dale, 23716 Matts,
Romulus Michigan 48172 (US)**
Inventor: **Martin, Robert Anthony, 45202 Emery,
Northville Michigan 48167 (US)**

(74) Representative: **Messulam, Alec Moses, A.
Messulam & Co. 24 Broadway, Leigh on Sea
Essex SS9 1BN (GB)**

## Description

This invention relates to a method of making casting metals and, more particularly, to making evaporative patterns for metal casting according to the wording of claim 1.

The evaporative casting process (ECP) employs a foam pattern formed from a material that is substantially completely combustible upon contact with molten metal. Foamed thermal plastic resinous materials such as polystyrene, polyurethane, and polyethylene are ideally suited to the production of this fugitive pattern. They possess the necessary strength to remain dimensionally stable during embedment of the pattern in a sand mold body, and they have a weight which is dramatically small. This, coupled with the volatility of the resinous foam, makes for a rapid and complete burnout of the pattern upon pouring of the metal casting charge.

Such foam patterns are typically made by expanding resinous beads to the shape of a pattern die. The beads are steamed and expanded to form a solid mass and conformed to the prepared surfaces of the die. If the casting to be made is of a complex nature, such as an engine manifold or engine block, the splitting of the pattern into parts is necessary to define all of the under-surfaces of the pattern. The die parts must be withdrawn in a lineal direction to expose the foam pattern after expansion; any undercut surfaces or reverse surfaces will not be readily defined unless separately molded. Thus, the overall pattern for a complex metal casting must be split into three or more parts allowing expansion molding of all of the surfaces of the overall pattern part.

With the advent of multiple pattern pieces to make up an entire pattern replica, the necessity for joining such pattern parts has arisen. The initial approach to joining such foam pattern parts has been by use of frictional journalling, such as disclosed in U.S. patent 4 240 492. However, this method is disadvantageous because the crevice between the journalled parts will allow the refractory wash (a refractory coating that is applied to the pattern assembly) to creep into the crevice and result in one or more casting flaws in the final product.

Gluing of pattern parts has been employed, such as suggested in U.S. patent 4 281 705. This gluing technique generally employs hot melt adhesive which is of a paraffin base and has a melting temperature of about 170°F or lower so as not to destroy or thermally distort the foam pattern part to which the glue is applied. Unfortunately, such hot melt adhesive (a) fails to fill gaps in the parting planes between the pattern parts, (b) may not be continuous and accurately deposited to eliminate all voids along the glue joint, (c) fails to grip quickly, and (d) does not necessarily provide a strong joint between the pattern parts.

It is an object of this invention to provide a method of joining mating rigid foam plastic pattern members by use of a hot melt adhesive which (a) has a high melting temperature but which is aerated to provide a reduced surface effective temperature to prevent thermal deposition of the plastic pattern members and thereby reduce distortion, (b) provides better gap filling between the crevices of two mated plastic foam patterns, (c) increases the open time of the adhesive application before setting, (d) provides a stronger and substantially instant bonding as opposed to a low bonding powder which takes a long time to cure, and (e) provides a little or no run-off of the hot melt adhesive after deposition onto surfaces which are not flat or horizontal.

According to the invention there is provided a method of joining mating pattern members (11, 12, 13) together along mateable margins to form an assembly, said pattern members (11, 12, 13) being comprised of rigid plastic foam, heat deformable at or above a temperature of about 79°C (175°F), the assembly being used in the evaporative pattern casting process for casting metals, comprising; (a) applying a heat source (14) to a supply of hot melt adhesive to heat said adhesive to a liquid condition, said adhesive having a surface tension effective to permit said adhesive to be foamed by admixture with an inert gas, a softening temperature of 149 - 204°C (300 - 400°F), an inability to chemically attach said pattern members, a vaporisation temperature of 260°C (500°F) or less, and an ability to remain in a nonsetting viscous liquid condition for at least 25 - 40 seconds after removal from said heating source; (b) extruding (16) a foam bead comprised of a mixture of said adhesive and an inert gas, said foam bead having a surface temperature of 77°C (170°F) or less, said extruded foam bead being deposited along selected mateable margins (20 - 32) of at least one of said pattern members (11, 12, 13); and (c) bringing at least a margin of one pattern member containing said foam bead into fixed mating relationship with a mating margin of the other pattern member.

Preferably, the plastic foam is comprised of a material selected from the group consisting of polystyrene, polyurethane, and polyethylene. Preferably, the plastic foam has a density in the range of 16 - 29 kg/m³ (1.0 - 1.8 lb/ft³).

Preferably, the adhesive is polypropylene and, preferably, the surface tension of the hot melt adhesive is sufficient to generate foam and hold bubbles without bursting until the foamed adhesive solidifies. Preferably, the hot melt adhesive sets up to a bonding condition within a time period of three seconds or less. Preferably, the adhesive has the ability to retain foamed bubbles intact for a period of at least 40 seconds, but will vary with the specific adhesive employed.

The extrusion of the beam can be carried out at a variable rate of deposits such as in the range of .54 - 161 cm³/m (.01 to 3 in³/ft) for beam widths of .08 - 1.3 cm (.03 to .5 inches). Preferably, the bead is deposited at a rate of 2.7 cm³/m (.05 in³/ft) at a bead width of .15 cm (.06 inches). Preferably, the bead fills gaps between the mated pattern member margins by volumetric expansion.

The invention will now be described further, by way of example, with reference to the accompanying drawings, in which:

Figure 1 is an exploded perspective view of pattern pieces along which a hot melt foamed adhesive bead is applied by way of a robotically controlled adhesive gun; and;

Figure 2 is a view of the opposite side on the end pattern piece to illustrate the glue line pattern along which the robotically controlled adhesive gun is moved.

Use of foam patterns (comprised of polystyrene, polyurethane or polyethylene) in the casing of metals has been known for at least the past 20 years. During this period, substantially all of such patterns have been of simple, unitary shapes. In instances where the casting pattern was necessarily divided into parts to allow the foam parts to be fully formed, such pattern parts had to be joined together.

The necessity of multiple pattern parts is inherent in the making of complex castings. The splitting of an entire pattern into parts is necessitated by the requirement to fully define all of the surfaces of the pattern by the use of dies which must be withdrawn in a lineal direction from the member that is cast. Thus, to facilitate the movement of the die from the foam pattern after it is cast, the pattern itself must be split into at least three pattern parts to allow the various dies to obtain the definition of internal complex surfaces.

It has become the custom to divide such complex patterns along parting planes that pass through the exterior of the pattern and create joining surfaces or joining margins along a substantial portion of the exterior of the pattern.

Commercially available hot melt adhesive bonding equipment is typically limited to the dispensing of an extruded bead of liquified glue along flat, horizontal planar surfaces to be joined together. Since the pattern pieces are split across flat planes, this extrusion or deposition of hot melt glue can often be printed onto such flat surfaces in a manner such as the kissing of a hot melt glue platen against the surfaces which are to be joined. The hot melt adhesives employed by such equipment is of the parrafin based type and is 121°C (250°F) necessarily heated to a temperature of about make it satisfactorily fluid. Such glue condition allows it to run off if deposited onto surfaces other than level, which severely complicates the joining process and detrimentally affects the quality of the casting. In addition, the paraffin based glues are considered generally weak, and if separation of the glue joint does occur, it will take place at the paraffin glue to foam interface.

The integrity of the glue joints thus formed between the foam pattern segments is very important since does affect the quality of the casting. The quality is affected because any absence of glue or improperly applied glue at a joint enables the refractory wash, which is traditionally applied to the foam pattern segments after they have been formed and prior to insertion into the molding assembly, to seep into the glue joint. The presence of this wash coating in or at a joint interface results in the absence of metal in the final casting, thereby creating particularly small defects that must be repaired or the casting is scrapped.

To achieve the object or objects of this invention, the inventive process essentially comprises the deposition of extrusion of a foamed adhesive onto the foam pattern surfaces that are to be mated and bonded, the adhesive being selected with criteria in mind which eliminates the disadvantages and obtains the advantages above cited. The foam pattern pieces are joined together by the use of hot melt adhesive that is foamed under conditions which promote some slight chemical penetration of the adhesive into the subsurface of the plastic pattern pieces. The resulting foamed hot melt zone is stronger than the pattern substrate.

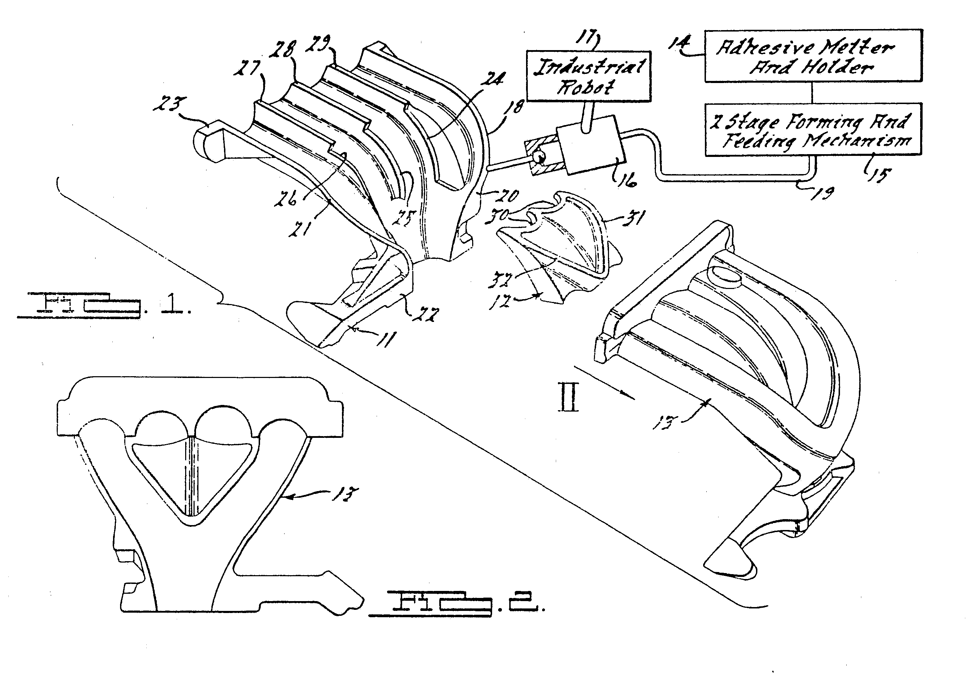

As an example of how the present method may be carried out turn to Figure 1, wherein an exploded view of a preferred type of clamshell-shaped assembly is illustrated.

The pattern members of use for this process are typically made by the use of polystyrene beads of a predetermined density (such as in the range of 1.0 - 1.6 lbs/ft³), which are subjected to steam and expanded within a die assembly, the bead expansion forming a solidified foam body which bears tightly against the contours of the die assembly and adopts the shape thereof to form the exterior of the pattern member. The surface of each such foam pattern member is smooth and continuous, but visually the bead grain lines can be observed; optimally the pattern has zero porosity.

The pattern members are defined herein in configurations (such as shown in Figure 1 which include three pieces 11 - 12 - 13) to define an intake manifold casting.

The first step of the process is directed to the extrusion of a foamed adhesive bead. This can be carried out by melting a selected adhesive of the polypropylene type. The adhesive is selected with the following criteria in mind; a softening temperature of 149 - 204°C (300 - 400°F) to enable a foam to be formed therefrom, an inability to chemically attack the plastic material of the pattern members, a vaporization temperature of 293°C (560°F) or less, a heat stability of 15 - 25%, a viscosity of 4 - 5 Pas (4000 - 5000 cP) at 149°C (300°F), an ability to remain in a nonsetting viscous liquid condition for at least 25 - 40 seconds after removal from a heating source, and a surface tension effective to permit the adhesive to be foamed by admixture with an inert gas.

An example of a commercial adhesive which would meet the above criteria is that of Eastobond A-148S, a hot melt adhesive that is distributed by Eastman Chemical Products, Inc. Such adhesive has a polypropylene base, a softening point 150°C (302°F) a viscosity at 177°C of 4.2 Pas (4200 cP) a heat stability (change in viscosity after 100 hours up to 177°C (350°F) which is only 15 %, a density of .89 gm/cm³, and a flash point of 288°C (550°F).

The foaming and extrusion of a foam bead may be carried out by the use of an adhesive melter and holder 14 which then transmits the fluid adhesive to a two-stage foaming and feeding mechanism 15 which in turn delivers the foamed adhesive hydraulically to a deposition gun 16; the gun 16 is carried by an industrial robot 17 for accurate placement of a bead 18. The melter 14 may be of several different types, which include tank melters, grid melters, or bulk melters. The tank melter is preferred for purposes of this invention because it is most versatile in accepting different hot melt configurations. Whether the adhesive comes in the form of granulated material, slabs, or blocks, the tank will accommodate it as long as the total tank size and opening permits it.

The molten hot melt adhesive is fed to the feeding mechanism 15, usually by gravity, but may be fed by hydraulic pressure through heated flexible hoses 19. A preferred foaming device and feeding mechanism 15 is a two-stage piston pump or gear pump. In this mechanism, nitrogen is volumetrically controlled and metered into the hot melt adhesive. The first stage or feed pump operates as a conventional gear pump acting as a constant displacement device. This pump provides a controlled metered amount of hot melt adhesive to be delivered to the mixing or second stage pump where a metered amount of gas, such as nitrogen, is introduced at a stage ratio to achieve the desired density reduction. As the two stages are driven by a common drive shaft, a fixed rotational speed exists between the first and second stage pumps. The gas and hot melt adhesive are combined to form a homogeneous mixture which is carried around the periphery of the pump. As the hot melt/gas mixture is carried toward the discharge point of the pump, a progressive buildup of hydraulic pressure or backpressure of the system causes the gas to go into solution with the hot melt adhesive. Solution, in this case, is defined as the result of dispersing or dissolving a gas into the hot melt adhesive to form a single-state fluid, comparable to the solublized gas in a carbonated beverage. The hot melt in a system under pressure appears like any other hot melt. However, the gas is not seen nor are the bubbles visible. The foamed adhesive contains bubbles of a certain character which are characterized so as not to burst within a time period after deposition of 40 seconds. This is insured by selection of the proper surface tension for the adhesive, such as 5 x 10⁻² - 15 x 10⁻² (50 - 150 dyne/cm) at 60°C; this is worthwhile because it provides better or substantially instant bonding.

From the moment of deposition of the foam adhesive on mateable margins of the pattern members, to the time at which the adhesive foam fails to provide a good bond upon contact, is approximately up to 30 - 40 seconds, and preferably no more than 28 seconds is required for the average application. The volumetric increase of the foam adhesive assists in filling very minute gaps that might occur between the mating surfaces that are to be bonded. The members are tightly bonded together substantially upon contact as a result of the bursting of the bubbles within the foamed adhesive causing the adhesive to solidify and exert its full adhesive qualities. The foam adhesive, because of its temperature, has the ability to penetrate the outer ply of the foamed replica or pattern segment, increasing the holding power of the bonding.

As an example of how the foamed adhesive can be carried out within an industrial environment, the pattern members (as shown in Figure 1) received extruded foamed adhesive 18 from the gun 16 as guided by robot 17 along the margins identified as 20 through 32. The deposition time for the first pattern segment for all of the margins on the first pattern member or segment 11 was 15 seconds. The deposition time for the second pattern member or segment 12 was 30 seconds. Preferably, the foam adhesive may be deposited first onto the margins 20 - 29 of the member 11 and then member 12 (without foam glue) is wedged into mating relationship with member 11, causing margins 24 - 26 to mate with cooperative margins on member 12. Then foam glue may be applied to margins 30 - 32 on member 12 in its installed position. Finally, member 13 is brought into proper position with assembled members 11 and 12 by mating margins 20 - 23, 27 - 32 with cooperative margins on member 13. The mating together of the pattern members may be carried out manually.

The strength of the bond between the members was determined by a peel strength measurement (at an angle of 180°); a test strip of this foam adhesive had a peel strength of 157 cm/cm (400 gm/in) of width and a peel failure temperature (under a load of 100 grams) of 100°F (38°C). The foam adhesive had a shear failure temperature (under a load of 100 grams) of 230°F (110°C). No visible attack or distortion of the foam patterns could be observed as a result of the adhesive deposition.

## Claims

1. A method of joining mating pattern members (11, 12, 13) together along mateable margins to form an assembly, said pattern members (11, 12, 13) being comprised of rigid plastic foam, heat deformable at or above a temperature of about 79°C (175°F), the assembly being used in the evaporative pattern casting process for casting metals, comprising; (a) applying a heat source (14) to a supply of hot melt adhesive to heat said adhesive to a liquid condition, said adhesive having a surface tension effective to permit said adhesive to be foamed by admixture with an inert gas, a softening temperature of 149 - 204°C (300 - 400°F), an inability to chemically attach said pattern members, a vaporisation temperature of 260° (500°F) or less, and an ability to remain in a non-setting viscous liquid condition for at least 25 - 40 seconds after removal from said heating source; (b) extruding (16) a foam bead comprised of a mixture of said adhesive and an inert gas, said foam bead having a surface temperature of 77°C (170°F) or less, said extruded foam bead being deposited along selected mateable margins (20 - 32) of at least one of said pattern members (11, 12, 13); and (c) bringing at least a margin of one pattern member containing said foam bead into fixed mating relationship with a mating margin of the other pattern member.

2. A method as claimed in Claim 1, in which said pattern members are comprised of a material selected from the group consisting of polystyrene, polyurethane, and polyethylene.

3. A method as claimed in Claim 1 or 2, in which said adhesive comprises polypropylene.

4. A method as claimed in Claim 1, in which said adhesive is further characterised by an ability to retain bubbles for said foam, when formed, intact for at least 40 seconds after deposition.

5. A method as claimed in Claim 1, in which the surface tension of said adhesive is $5 \times 10^{-2}$ - $15 \times 10^{-2}$ N/m (50 - 150 dyne/cm) at 60°C.

6. A method as claimed in Claim 1, in which said adhesive effectively sets up to a bonding condition within a time period of three seconds or less and without the use of added pressure.

7. A method as claimed in any on of the preceding claims in which extrusion of said bead is carried out at a rate of .54 - 161 cm³/m (.01 to 3 in ³/ft) for bead widths of .08 - 1.3 cm (.03 - .5 inches).

8. A method as claimed in any one of the preceding claims in which said extruded bead is effective to fill gaps between members as a result of volumetric expansion of said deposited foam.

## Patentansprüche

1. Verfahren zum Zusammenfügen aufeinander passender Modellteile (11, 12, 13) entlang Paßrändern zur Bildung einer Baugruppe, wobei diese Modellteile (11, 12, 13) aus bei oder über einer Temperatur von etwa 79°C (175°F) heiß verformbaren Kunststoffhartschaum bestehen, wobei die Baugruppe für das Modellausdampfgießverfahren zum Metallguß verwendet wird, darin bestehend, daß man (a) eine Wärmequelle (14) auf einen Vorrat Schmelzkleber einwirken läßt, um diesen in den flüssigen Zustand zu versetzen, wobei dieser Kleber eine solche Oberflächenspannung, daß er durch Vermischen mit einem Inertgas verschäumbar ist, und einen Erweichungspunkt von 149 - 204°C (300 - 400°F) aufweist, sich nicht chemisch an jene Modellteile binden kann, eine Verdampfungstemperatur von 260° (500°F) oder niedriger aufweist sowie nach Entfernung jener Wärmequelle mindestens 25 - 40 Sekunden lang in einem nichterstarrenden viskosen flüssigen Zustand verbleiben kann, (b) einen aus einem Gemisch dieses Klebers und eines Inertgases bestehenden Schaumwulst (16) extrudiert, wobei dieser Schaumwulst eine Oberflächentemperatur von 77°C (170°F) oder niedriger aufweist und dieser extrudierte Schaumwulst entlang ausgewählten Paßrändern (20 - 32) mindestens eines jener Modellteile (11, 12, 13) abgelegt wird, und (c) mindestens einen Rand des einen, diesen Schaumwulst enthaltenden Modellteils in feste Paßverbindung mit dem dazu passenden Rand des anderen Modellteils bringt.

2. Verfahren nach Anspruch 1, worin diese Modellteile aus einem aus der Polystyrol, Polyurethan und Polyethylen umfassenden Gruppe ausgewählten Material bestehen.

3. Methode nach Anspruch 1 oder 2, worin besagter Kleber aus Polypropylen besteht.

4. Verfahren nach Anspruch 1, worin dieser Kleber ferner durch eine Fähigkeit, Blasen dieses Schaums nach der Bildung mindestens 40 Sekunden lang nach dem Ablegen unversehrt zu belassen, gekennzeichnet ist.

5. Verfahren nach Anspruch 1, worin die Oberflächenspannung besagten Klebers $5 \cdot 10^{-2}$ - $15 \cdot 10^{-2}$ N/m (50 - 150 dyn/cm) bei 60°C beträgt.

6. Verfahren nach Anspruch 1, worin dieser Kleber effektiv innerhalb eines Zeitraums von drei Sekunden oder weniger sowie ohne Ausübung von Druck zu einem klebenden Zustand erstarrt.

7. Verfahren nach einem der vorhergehende Ansprüche, worin die Extrusion jenes Wulstes mit einer Geschwindigkeit von 0.54 - 161 cm³/m (0.01 bis 3 Kubikzoll/Fuß) bei Wulstbreiten von 0.08 - 1.3 cm (0.03 - 0.5 Zoll) erfolgt.

8. Verfahren nach einem der vorhergehenden Ansprüche, worin dieser extrudierte Wulst zufolge der volumetrischen Ausdehnung dieses abgelegten Schaums eine Ausfüllung der Lücken zwischen den Teilen bewirkt.

## Revendications

1. Procédé de raccordement d'organes complémentaires d'un modèle (11, 12, 13) le long de marges complémentaires afin qu'ils forment un ensemble, les organes (11, 12; 13) du modèle étant formés d'une mousse rigide de matière plastique qui peut se déformer thermiquement à une température supérieure ou égale à 79°C environ (175°F), l'ensemble étant utilisé dans une opération de moulage à modèle vaporisable destinée à la coulée de métaux, comprenant (a) l'application de la chaleur d'une source (14) à une réserve d'un adhésif thermofusible afin que l'adhésif soit chauffé à l'état liquide, l'adhésif ayant une tension superficielle permettant efficacement la formation d'une mousse de l'adhésif par mélange avec un gaz inerte, une température de ramollissement comprise entre 149 et 204°C (300 et 400°F), une inaptitude à attaquer chimiquement les organes du modèle, une température de vaporisation inférieure ou égale à 260°C (500°F), et une aptitude à rester à un état liquide sans durcissement pendant au moins 25 à 40 s après arrêt du chauffage par la source, (b) l'extrusion (16) d'un cordon de mousse formé d'un mélange de l'adhésif et d'un gaz inerte, le cordon de mousse ayant une température superficielle inférieure ou égale à 77°C (170°F), le cordon extrudé de mousse étant déposé le long de marges choisies complémentaires (20 - 32) de l'un au moins des organes de modèle (11, 12, 13), et (c) la mise d'au moins une marge d'un organe de modèle contenant le cordon de mousse en coopération fixe avec une marge complémentaire de l'autre organe de modèle.

2. Procédé selon la revendication 1, dans lequel les organes de modèle sont formés d'un matériau choisi dans le groupe qui comprend le polystyrène, le polyuréthane et le polyéthylène.

3. Procédé selon la revendication 1 ou 2, dans lequel l'adhésif est le polypropylène.

4. Procédé selon la revendication 1, dans lequel l'adhésif est capable de maintenir intactes les bulles de la mousse pendant au moins 40 s après le dépôt, lorsqu'elles ont été formées.

5. Procédé selon la revendication 1, dans lequel la tension superficielle de l'adhésif est comprise entre $5 \cdot 10^{-2}$ et $15 \cdot 10^{-2}$ N/m (50 à 150 dynes par centimètre) à 60°C.

6. Procédé selon la revendication 1, dans lequel l'adhésif durcit efficacement en assurant la liaison en un temps inférieur ou égal à 3 s et sans utilisation d'une pression supplémentaire.

7. Procédé selon l'une quelconque des revendications précédentes, dans lequel l'extrusion du cordon est réalisée à raison de 0,54 à 161 cm³/m (0,01 à 3 pouces cubes par pied) pour des largeurs de cordon de 0,08 à 1,3 cm (0,03 à 0,5 pouce).

8. Procédé selon l'une quelconque des revendications précédentes, dans lequel le cordon extrudé remplit efficacement les espaces existant entre les organes, du fait de la dilatation en volume de la mousse déposée.

FIG. 1.

FIG. 2.

Adhesive Metter And Holder

2 Stage Forming And Feeding Mechanism

Industrial Robot